# DEMANDE DE BREVET EUROPEEN

(11) **EP 1 926 032 A1**
(43) Date de publication de la demande: **28.05.2008**
(21) Numéro de dépôt: 07121342.5
(22) Date de dépôt: 22.11.2007
(51) Int. Cl.: G06F 17/30

(54) **Procede de recherche hierarchique sur un graphe conditionnel**

(30) Priorité: 23.11.2006 FR 0610373
(71) Demandeur: Lascom, 91571 Bievres (FR)
(72) Inventeur: Henriot, Charles M., PARIS 75015 (FR)
(74) Mandataire: Henriot, Marie-Pierre

(57) **Abrégé**

L'invention concerne un procédé rapide de recherche hiérarchique de données vérifiant au moins un ensemble de critères prédéterminés C, dans un graphe orienté acyclique qui est stocké dans un système de gestion de base de données relationnelle apte à être interrogé par un langage de requête, les critères étant déterminés sur les noeuds et/ou les liens du graphe. Chaque critère est déterminé bloquant (respectivement non bloquant) c'est-à-dire tel que dès que le critère n'est pas vérifié, ses noeuds descendants sont exclus, (respectivement seul ce noeud est exclu, sans conséquence sur ses noeuds descendants).
Il comprend les étapes suivantes consistant à :
- séparer l'ensemble C en un ensemble de critères bloquants C_{b} et non bloquants C_{nb}
- rechercher au moyen du langage de requête les noeuds du graphe vérifiant l'ensemble des critères bloquants C_{b}, ces noeuds étant regroupés dans un ensemble G,
- rechercher au moyen du langage de requête, les noeuds de G vérifiant l'ensemble des critères non bloquants C_{nb}.

## Description

Le domaine de l'invention est celui des recherches hiérarchiques dans un graphe orienté (« Directed Acyclic Graph » ou DAG en anglais) qui est stocké dans une base de données relationnelle.

Il s'agit plus précisément de rechercher dans le DAG, les données qui vérifient un ensemble de critères prédéterminé C.

On rappelle qu'un graphe est un ensemble de noeuds et de liens entre ces noeuds, représentant des données. Un chemin est une suite de liens parcourus dans le même sens tel que chaque lien de la suite a une extrémité en commun avec le lien précédent. Un cycle est un chemin dans lequel un noeud apparaît au moins deux fois.

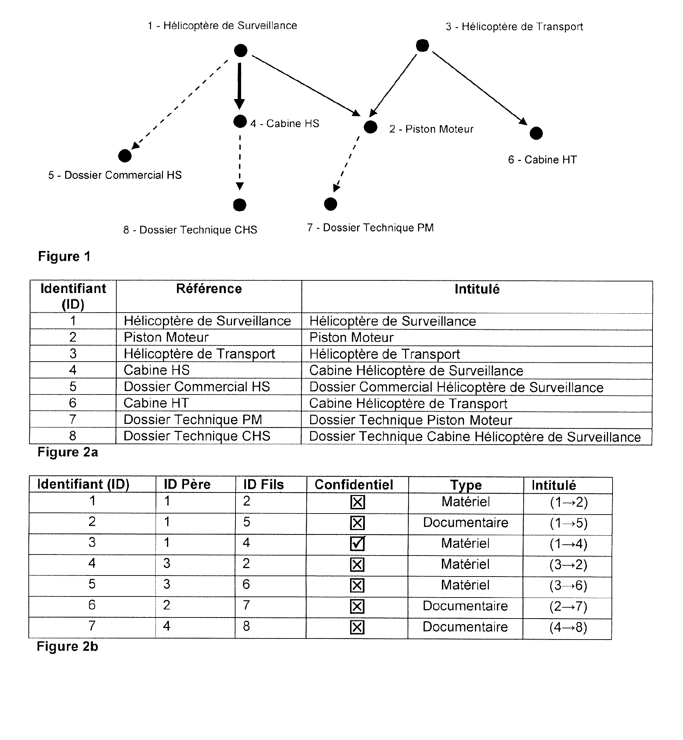

Un DAG dont on présente un exemple figure 1, est un graphe dont tous les liens sont orientés et qui n'a pas de cycle.

De manière à permettre d'effectuer des recherches dans un DAG au moyen d'un système informatique, le DAG est stocké dans un système de gestion de base de données relationnelle ou SGBD prévu pour réaliser de telles recherches en utilisant un langage d'interrogation tel que le langage SQL. Ce SGBD comprend un ensemble de tables représentant les données et liens du DAG ; il répertorie pour chaque noeud l'ensemble des noeuds fils. Un exemple de tables associées au DAG de la figure 1 est représenté avec une table des noeuds figure 2a, une table des liens figure 2b. La table des noeuds comprend un champ identifiant, un champ référence et un champ intitulé des données ; la table des liens comprend un champ identifiant, un champ pour l'identifiant d'un noeud père, celui d'un noeud fils, deux champs de propriété, en l'occurrence « Confidentiel » et « Type », et un champ intitulé du lien. Les identifiants des noeuds père et fils sont issus des identifiants de la table des noeuds.

Dans la suite, un noeud désigne une ligne de la table des noeuds, un lien désigne une ligne de la table des liens.

Une recherche est réalisée à partir d'un ensemble de critères. Lorsque les noeuds et/ou les liens sont soumis à un ou plusieurs critères, le graphe est désigné graphe orienté acyclique conditionnel ou DAGC (Directed Acyclic Graph Conditionnal). Un critère s'exprime sur les champs d'un lien ou d'un noeud: un critère sur un champ est vrai ou faux. Dans l'exemple des figures 2, il n'y a pas de critères sur les noeuds, mais « le champ 'Type' est 'Documentaire' » est un critère sur les liens. Les critères sont déterminés préalablement à l'interrogation du DAGC. Ces critères sont définis en fonction des droits de l'utilisateur connecté (par exemple, il n'a accès qu'aux données non confidentielles) ou d'une recherche formulée par cet utilisateur (l'utilisateur recherche les données documentaires).

Sur la figure 1, les liens « documentaires » sont représentés par une flèche en pointillés, les liens « matériels » par une flèche pleine et les liens « confidentiels » par une flèche en gras. La flèche du lien 1-4 est une flèche pleine en gras car en outre, pour ce lien, le champ « Confidentiel » est vrai.

Un système informatique qui utilise des DAGC doit pouvoir interroger les descendants d'un noeud donné en fonction d'un ensemble de critères. L'ensemble des descendants d'un noeud de base sont les noeuds pour lesquels il existe un chemin qui relie ce noeud de base à chacun de ces noeuds.

Il est connu d'effectuer sur une base de données associée à un DAGC des recherches sur les données vérifiant un ensemble de critères prédéterminés C, par récursivité. Pour rechercher tous les descendants d'un noeud, on interroge effectivement tous les fils du noeud considéré dont les liens correspondent aux critères C puis on recommence pour chacun de ses fils et ainsi de suite. Une recherche se décompose alors en un nombre variable d'interrogations sur la base de données relationnelle. Le nombre de ces interrogations itératives ou récursives ne peut être connu à l'avance, il dépend du nombre de données et de niveaux du graphe et de l'ensemble des critères C. Les performances se dégradent lorsque la profondeur du graphe augmente.

Dans l'exemple du graphe de la figure 1, les requêtes de la recherche des descendants de l'*Hélicoptère de Surveillance* dont tous les liens sont « non confidentiels » sont les suivantes :
1. requête sur tous les fils « non confidentiels » de l'*Hélicoptère de Surveillance;* le résultat est le *Piston Moteur,* et le *Dossier Commercial HS.* La *Cabine HS* n'est donc pas retournée.
2. requête sur tous les fils « non confidentiels » du *Piston Moteur ;* le résultat est le *Dossier Technique PM.*
3. requête sur tous les fils « non confidentiels » du *Dossier Commercial HS ;* aucun noeud dans le résultat.
4. requête sur tous les fils « non confidentiels » du *Dossier Technique PM ;* aucun noeud dans le résultat.

Ainsi les noeuds du résultat sont l'*Hélicoptère de Surveillance,* le *Dossier Commercial HS,* le *Piston Moteur* et le *Dossier Technique PM.*

Le nombre de requêtes et donc la durée de cette recherche augmentent considérablement pour d'importants volumes de données. Par exemple, il peut y avoir plus d'un millier de requêtes pour une recherche sur un graphe d'un millier d'éléments.

Elle augmente aussi d'autant plus pour des recherches approfondies. On peut citer comme exemples de recherche approfondie, celles qui consistent à croiser une recherche avec une autre, ou à effectuer un tri sur les résultats de la recherche comme dans le cas de la pagination, etc. La pagination consiste par exemple à identifier le 80è élément et les 30 suivants dans la liste des éléments du résultat.

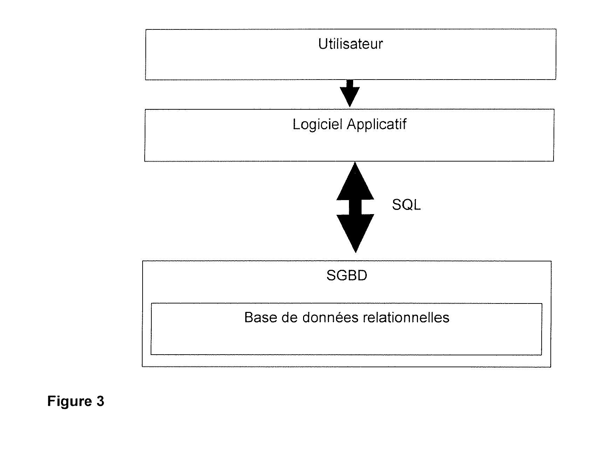

Le système informatique permettant d'effectuer une recherche comprend deux parties, l'une désignée logiciel applicatif, l'autre système de gestion de base de données désignée SGBD, comme représenté figure 3. Le logiciel applicatif permet d'assurer un ensemble de fonctionnalités autour des données stockées dans la base de données du SGBD ; il fait en outre le lien avec l'utilisateur. Les recherches hiérarchiques font partie de cet ensemble de fonctionnalités. Les deux systèmes communiquent avec le langage SQL à travers un réseau informatique. Le logiciel applicatif est par exemple un système de gestion de documents ou un système de gestion de configuration ou un système de gestion du cycle de vie d'un produit.

Le logiciel applicatif supporte la plus grande partie des traitements tels que ceux des recherches hiérarchiques car le SGBD ne permet pas de traiter ce type de recherche directement; il ne traite que des recherches à un seul niveau comme par exemple quels sont les fils d'un noeud donné et non quels sont tous les descendants d'un noeud donné. Une recherche sur plusieurs niveaux nécessite alors plusieurs échanges de données entre le logiciel applicatif et le SGBD : les données sont chargées et traitées par le logiciel applicatif au fur et à mesure des requêtes à un niveau pour pouvoir réaliser les requêtes suivantes.

Cela implique des contraintes en :
- capacité mémoire pour charger un important volume de données,
- temps de calcul pour traiter ces données,
- charge du réseau pour les échanges de données entre le logiciel applicatif et le SGBD.

Or le logiciel applicatif qui n'est pas conçu pour gérer d'importants volumes de données, constitue en fait un goulet d'étranglement.

Le but de l'invention est de permettre d'effectuer une recherche hiérarchique en allégeant ces contraintes, quelle que soit la profondeur du graphe et/ou le nombre d'éléments (de noeuds), et sans être pénalisé en terme de performances.

Le principe de l'invention est de réduire la charge de travail du logiciel applicatif en déportant la plus grande partie des traitements sur le SGBD.

L'invention a pour objet un procédé de recherche hiérarchique de données vérifiant au moins un ensemble de critères prédéterminés C, dans un graphe orienté acyclique comportant des noeuds et des liens entre ces noeuds, les critères étant déterminés sur les noeuds et/ou les liens, le graphe étant stocké dans des tables d'un système de gestion de base de données relationnelle apte à être interrogé par un langage de requête. Il est principalement caractérisé en ce que chaque critère étant déterminé bloquant ou non bloquant, un critère bloquant étant tel que dès que le critère n'est pas vérifié sur un lien et/ou un noeud, le noeud terminal de ce lien respectivement ce noeud et ses noeuds descendants sont exclus, un critère non bloquant étant tel que dès que le critère n'est pas vérifié sur un lien respectivement un noeud, seul ce lien respectivement ce noeud est exclu, sans conséquence sur ses noeuds descendants, il comprend les étapes suivantes consistant à :
- séparer l'ensemble C en un ensemble de critères bloquants C_{b} et un ensemble de critères non bloquants C_{nb}
- rechercher les noeuds du graphe vérifiant l'ensemble de critères bloquants C_{b}, ces noeuds étant regroupés dans un ensemble G,
- rechercher les noeuds de G vérifiant l'ensemble de critères non bloquants C_{nb}.

Ces recherches sont réalisées au moyen du langage de requête.

De cette façon, les critères sont répartis en deux catégories selon qu'ils sont ou non bloquants, puis on effectue une recherche sur ce graphe à partir de ces deux catégories.

De préférence, préalablement aux étapes de recherche, le DAGC est transformé en un arbre complété par indexation désigné A, et stocké dans le système de gestion de la base de données, et
la 1ere étape de recherche comprend l'étape consistant à effectuer une requête au moyen du langage de requête, sur les noeuds de l'arbre A ne vérifiant pas l'ensemble de critères bloquants prédéterminés C_{b}, ces noeuds étant regroupés dans un ensemble E,
la 2è étape de recherche comprend l'étape consistant à effectuer une requête au moyen du langage de requête et en utilisant ladite indexation, sur les noeuds de A vérifiant l'ensemble de critères non bloquants prédéterminés C_{nb} et tels que chaque noeud n'est le descendant d'aucun noeud de E.

De cette manière la recherche hiérarchique s'effectue en seulement deux requêtes quelle que soit la profondeur du graphe d'origine et en améliorant les performances.

En effet les performances sont accrues concernant
- les échanges de données : chaque échange entre le serveur applicatif et le SGBD induisant une surcharge (établissement de l'échange, transfert des données sur le réseau, etc), ces échanges entre le logiciel applicatif et le SGBD sont réduits et prévisibles car le nombre de requête est constant.
- Le traitement des données : les requêtes sont réalisées par le SGBD. Il en découle trois avantages directs. D'une part les SGBD ont été conçus pour traiter un important volume de données, d'autre part les traitements sont réalisés là où les données sont stockées ce qui améliore les temps de calcul et finalement, le serveur applicatif est soulagé (en temps de calcul et en capacité mémoire) d'une partie de ces traitements, ces derniers étant déportés sur le SGBD.

Selon une caractéristique de l'invention, l'arbre est descendant ou ascendant.

Le langage de requêtes est par exemple le langage SQL.

L'indexation peut être une indexation par intervalles ou par chemins.

L'invention concerne aussi un logiciel applicatif comme par exemple un système de gestion de documents, ou un système de gestion de configurations, ou un système de gestion de cycle de vie d'un produit, comportant des moyens de mise en oeuvre du procédé tel que décrit.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un exemple de graphe orienté acyclique (DAG),
les figures 2a et 2b représentent les tables des noeuds et des liens du DAG de la figure 1 dans la base de données,
la figure 3 représente schématiquement un système informatique classique,

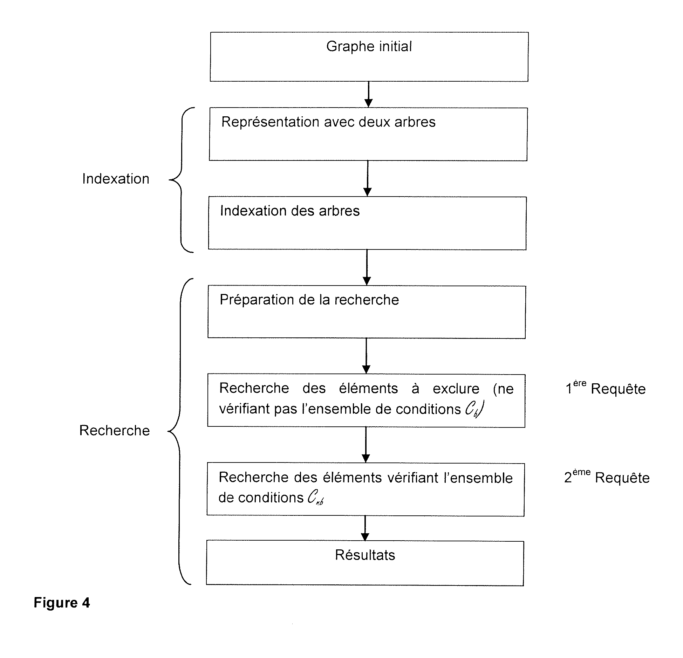

la figure 4 représente schématiquement les principales étapes du procédé selon l'invention,
les figures 5a et 5b représentent respectivement l'arbre descendant et l'arbre ascendant issus du graphe de la figure 1,
la figure 6a présente une table de l'arbre de la figure 5a complété par une indexation par intervalles et par chemins, et la figure 6b une représentation linéaire des intervalles obtenus,
la figure 7 représente de façon linéaire les intervalles de recherche.

D'une figure à l'autre, les mêmes éléments sont repérés par les mêmes références.

La première étape de cette recherche selon l'invention consiste à séparer l'ensemble des critères en deux sous-ensembles.

On distingue deux types de critères dans les recherches hiérarchiques dans un DAGC, les critères « bloquants » et les critères « non bloquants ».

Lorsqu'un critère est non bloquant, dès qu'il n'est pas vérifié sur un lien, seul ce lien est exclu, sans conséquence sur ses descendants. Le champ « Type est documentaire » est un exemple de critère non bloquant.

Lorsqu'un critère est bloquant dès qu'il n'est pas vérifié sur un lien, le noeud terminal de ce lien est bien sûr exclu mais aussi ses descendants, quels que soient leurs champs. Le champ « 'Confidentiel' est 'Faux'» est un exemple de critère bloquant.

Avant de lancer une recherche hiérarchique de données, on détermine si un critère est ou non bloquant.

L'ensemble Cd est donc séparé en un ensemble de critères bloquants C_{b} et un ensemble de critères non bloquants C_{nb}.

Comme il est difficile d'établir que les critères bloquants sont vérifiés sur tout le chemin sans utiliser la récursivité, on « inverse » indirectement la recherche et on l'effectue sur tous les éléments qui ne vérifient pas les critères bloquants.

Rechercher un noeud qui ne vérifie pas un critère revient à chercher le noeud qui vérifie le critère contraire. Un exemple est décrit plus loin.

Cette recherche se traduit par les deux étapes suivantes qui consistent à :
- rechercher les noeuds du graphe vérifiant l'ensemble de critères bloquants C_{b}, ces noeuds étant regroupés dans un ensemble G,
- rechercher les noeuds de G vérifiant l'ensemble de critères non bloquants C_{nb} .

Ces recherches effectuées au moyen du langage de requête sont par exemple réalisées par récursivité.

De préférence, préalablement à ces recherches, le graphe acyclique orienté est transformé en un arbre complété par indexation. Il y a plusieurs stratégies d'indexation possibles : une indexation dite à la volée, effectuée juste avant de réaliser la recherche hiérarchique, ou une indexation à intervalles réguliers, le soir par exemple, ou encore dès qu'un champ est modifié.

La base de données de stockage du DAGC d'origine répertorie pour chaque noeud l'ensemble de ses fils.

Connaissant pour chaque noeud du graphe l'ensemble de ses fils, ce DAGC est représenté sous la forme d'un arbre conditionnel descendant. Cet arbre est obtenu de la façon suivante.

Chaque noeud de l'arbre désigné noeud destinataire est associé à un lien du graphe, désigné lien d'origine ainsi qu'au noeud terminal du lien désigné noeud d'origine.

On crée un noeud racine « fictif » auquel on associe toutes les racines du graphe.

Récursivement, pour chaque nouveau noeud destinataire de l'arbre (associé à un lien d'origine et son noeud terminal), on crée de nouveaux noeuds fils respectivement associés à tous les liens partant du noeud d'origine couplés à leur noeud terminal.

Ainsi, les noeuds qui ont n pères dans le graphe d'origine sont dupliqués au moins n fois avec leurs descendants dans l'arbre de destination. Un noeud du graphe peut être associé à plusieurs noeuds de l'arbre. Un noeud de l'arbre représente ainsi un noeud du graphe avec un de ses liens entrants. On peut donc confondre la notion de lien et de noeud dans l'arbre. Les champs portés par le lien peuvent donc être appliqués sur le noeud terminal dans l'arbre.

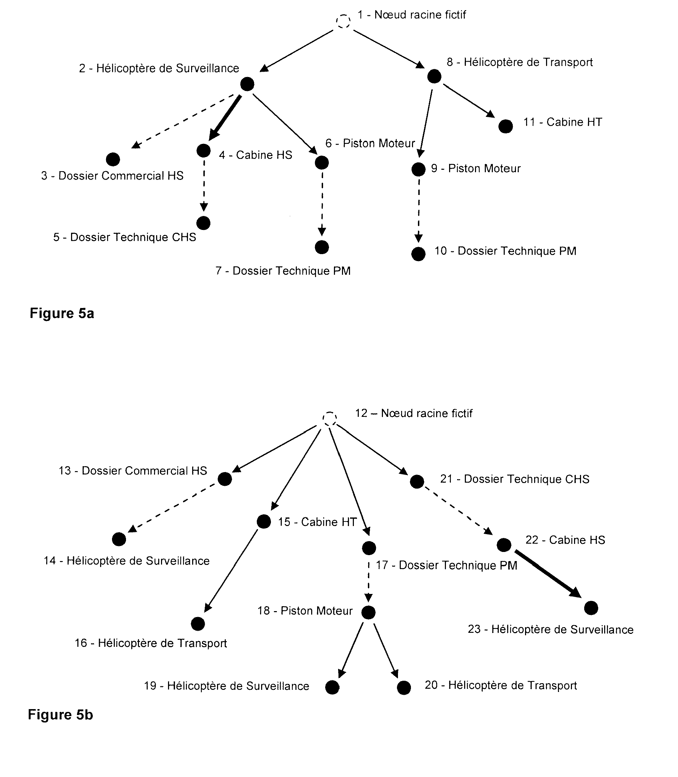

On a représenté figure 5a, l'arbre descendant créé à partir du DAGC de la figure 1.

La figure 6a est la représentation sous forme de table de l'arbre descendant de la figure 5a. Sur cette table, l'identifiant du noeud (ID Noeud) fait référence à l'identifiant (ID) de la figure 2b, l'identifiant du lien (ID Lien) à celui de la figure 2a. Les champs de la table de la figure 2b sont reportés sur cette table de la figure 6a.

De la même façon, le DAGC est représenté sous la forme d'un arbre ascendant en inversant les sens de tous les liens du DAGC. On a représenté figure 5b, l'arbre ascendant créé à partir du DGAC de la figure 1.

L'arbre descendant est utilisé pour effectuer des recherches descendantes et l'arbre ascendant pour des recherches ascendantes. Une recherche descendante correspond à une requête du type « contient » une recherche ascendante correspond à une requête du type « est contenu ».

Une fois créé, chaque arbre est alors indexé selon une méthode d'indexation. L'indexation sur un arbre associe à chaque noeud un index. Parmi ces méthodes d'indexation, on peut citer l'indexation par intervalle ou celle par chemin. L'indexation permet de savoir facilement si un noeud est un descendant d'un autre noeud: il suffit d'effectuer une simple comparaison des index des deux noeuds. Cette comparaison se traduit en opérations élémentaires du langage SQL telles que 'supérieur', 'inférieur' pour les intervalles ou 'commence par' pour les chemins. Par exemple, dans le cas d'une indexation par intervalle, un noeud P dont l'intervalle est [Pinf, Psup] est descendant d'un noeud D dont l'intervalle est [Dinf, Dsup] si l'intervalle de P est inclus dans l'intervalle de D soit Dinf < Pinf et Psup < Dsup : la comparaison des index peut donc être traduite à l'aide d'opérations élémentaires 'supérieur' et 'inférieur'. Dans l'arbre indexé par intervalle de la figure 6a, si on compare les index par intervalles [5, 8] et [6, 7], respectivement intervalles des noeuds 4 *(Cabine HS)* et 5 *(Dossier Technique CHS),* on peut en déduire que le noeud 5 est un descendant du noeud 4 car l'intervalle [5, 8] contient l'intervalle [6, 7] : en effet on a 5 < 6 et 7 < 8. De même, si on compare les index par chemin '1/2/4' et '1/2/4/5' des mêmes noeuds 4 *(Cabine HS)* et 5 *(Dossier Technique CHS),* la conclusion est identique, car le chemin `1/2/4/5' commence par '1/2/4'.

A contrario, pour les noeuds 4 *(Cabine HS)* et 6 *(Piston Moteur)* dont les intervalles sont [5, 8] et [9, 12], aucun intervalle ne contient l'autre (5 < 9 mais 12 > 8), il n'y a donc pas de relation entre ces deux noeuds. Enfin, si on compare les index par chemin '1/2/4' et '1/2/6' des noeuds respectifs 4 *(Cabine HS)* et 6 *(Piston Moteur),* aucun des chemins ne commence par l'autre, on obtient donc le même résultat.

La construction des index d'un arbre par chemin est simple : on construit l'index d'un noeud en ajoutant à l'index du père l'identifiant du noeud. Ainsi, par exemple l'index du noeud 5 *(Dossier Technique CHS)* est construit à partir de l'index du noeud père '1/2/4' auquel on ajoute 5 pour donner '1/2/4/5'. Le noeud racine n'ayant pas de père, son index est simplement son identifiant.

Pour indexer un arbre par intervalle, on définit pour chaque noeud un intervalle tel que l'intervalle de chaque fils est inclus dans l'intervalle du père.

L'indexation est obtenue de la manière suivante. Pour chaque noeud, si ce noeud n'a pas de frères, on prend pour borne inférieure la borne inférieure du père à laquelle on ajoute 1, sinon on prend pour borne inférieure le maximum des bornes supérieures de ses frères déjà indexés auquel on ajoute 1. La borne supérieure est alors

Bsup = Binf + 2*N +1 où N est le nombre de descendants du noeud.

Les intervalles de tous les descendants d'un noeud sont alors inclus dans l'intervalle du noeud du père par construction.

On va illustrer cette indexation sur l'exemple de l'arbre de la figure 5a. Les bornes de l'intervalle du noeud racine pour lequel N=10, sont :
[1, 1+2x10+1] soit [1, 22].

Pour le noeud *Hélicoptère de Surveillance,* on a N= 5 et les bornes sont donc: [1 +1, 2+2x5+1] soit [2, 13].

Ainsi de suite.

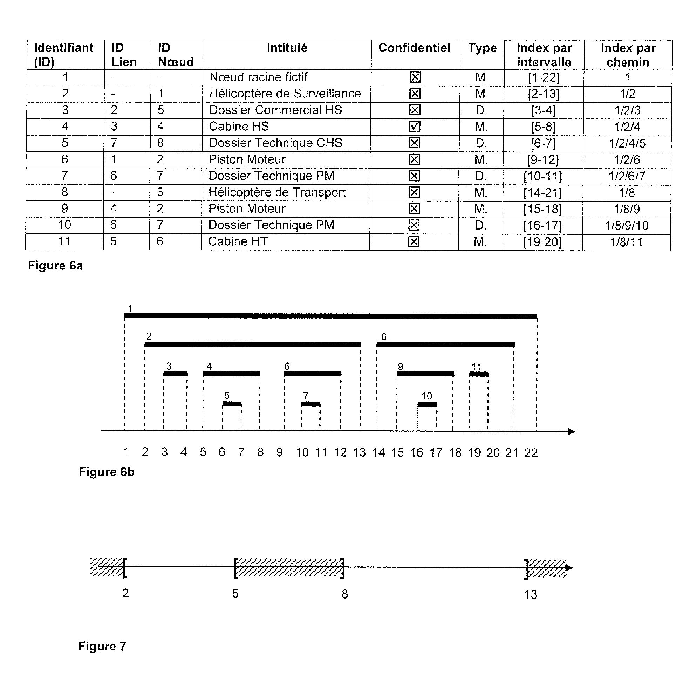

Une représentation linéaire des résultats obtenus est illustrée figure 6b. Chaque ligne correspond à un intervalle de la figure 6a, les numéros notés au-dessus de chaque ligne sont les identifiants.

Le choix d'une méthode d'indexation est un compromis entre la rapidité de la construction des index, la place mémoire prise par les index dans le SGBD et les performances des comparaisons lors des recherches. Par exemple, l'indexation par chemin, la plus simple se construit plus rapidement que celle par intervalle mais est moins performante que cette dernière quant à la place mémoire utilisée et quant aux performances des comparaisons.

On considère à présent la recherche elle-même ; elle est donc réalisée à partir d'un arbre indexé.

A priori, une recherche des noeuds vérifiant un ensemble de critères prédéterminés C sur un arbre descendant indexé permet d'obtenir en une seule requête l'ensemble des noeuds vérifiant cet ensemble de critères mais ne permet pas de vérifier que l'ensemble de critères C est valable sur l'ensemble du chemin qui mène d'un noeud père à un noeud descendant.

En effet, une recherche des descendants du noeud de l'*Hélicoptère de Surveillance* de l'arbre de la figure 5a, vérifiant le critère « le champ 'Confidentiel' est 'Faux'» fournit alors le résultat : *Hélicoptère de Surveillance, Dossier Commercial HS, Piston Moteur, Dossier Technique PM* et le *Dossier Technique CHS.* Seul le noeud *Cabine HS* est éliminé, alors que l'on souhaite aussi éliminer le *Dossier Technique CHS :* le noeud *Dossier Technique CHS* qui représente le lien *« Cabine HS → Dossier Technique CHS »* vérifie bien le critère, mais pas son père, le noeud *Cabine HS* qui représente le lien *« Hélicoptère de Surveillance → Cabine HS* ».

Dans l'arbre indexé, chaque noeud correspondant à un lien et un noeud du graphe, rechercher des noeuds et des liens dans le graphe est donc équivalent à rechercher des noeuds dans l'arbre.

Comme indiqué précédemment, on « inverse » indirectement la recherche et on l'effectue sur tous les éléments qui ne vérifient pas les critères bloquants.

Rechercher un noeud qui ne vérifie pas un critère revient à chercher le noeud qui vérifie le critère contraire.

On va illustrer cette propriété sur l'exemple de la figure 5a, en effectuant une recherche avec un critère bloquant : rechercher les noeuds qui ne vérifient pas le critère « le champ 'Confidentiel' est 'Faux'» revient à chercher les noeuds qui vérifient le critère contraire « le champ 'Confidentiel' est 'Vrai' ». « Le champ Confidentiel est faux » n'est pas vérifié (= « le champ Confidentiel est vrai » est vérifié) est un critère bloquant. Les noeuds de l'*Hélicoptère de Surveillance* vérifiant « le champ 'Confidentiel' est 'Vrai' » sont les données confidentielles de l'*Hélicoptère de Surveillance.* Le noeud *Cabine HS* qui représente le lien *« Hélicoptère de Surveillance→ Cabine HS »* est confidentiel et exclut donc ses descendants, en l'occurrence le *Dossier Technique CHS* bien que ce descendant satisfasse le critère « le champ 'Confidentiel' est 'Faux'».

Les résultats de la recherche sur les noeuds de l'*Hélicoptère de Surveillance* ne vérifiant pas le critère bloquant « le champ 'Confidentiel' est 'Faux'» (vérifiant donc « le champ 'Confidentiel' est vrai ») sont donc le *Dossier Commercial HS,* le *Piston Moteur* et le *Dossier Technique PM.*

Dans l'exemple de la figure 5a, une recherche avec un critère non bloquant « le champ 'Type' est 'Documentaire' » sur l*'Hélicoptère de Surveillance* a pour résultat : le *Dossier Commercial HS,* le *Dossier Technique CHS* et le *Dossier Technique PM,* alors que ni le lien *« Hélicoptère de Surveillance → Piston Moteur »* dont descend le *Dossier Technique PM,* ni le lien *« Hélicoptère de Surveillance → Cabine HS »* dont descend le *Dossier Technique CHS* ne sont des liens « documentaires » et ne vérifient donc pas le critère spécifié.

On peut aussi combiner les deux types de critères dans une recherche ; le résultat est l'intersection des résultats de chaque recherche portant sur un seul critère. Une recherche combinant les deux critères précédents, « le champ 'Confidentiel' est 'Faux'» comme critère bloquant et « le champ 'Type' est 'Documentaire' » comme critère non bloquant retourne donc l'intersection des deux résultats précédents soit : le *Dossier Commercial HS* et le *Dossier Technique PM.* Le *Piston Moteur* est ainsi éliminé par le critère non bloquant et la *Cabine HS* et son descendant, le *Dossier Technique CHS,* sont éliminés par le critère bloquant.

Plus précisément, soit A l'ensemble des noeuds à rechercher. Dans l'exemple de la figure 5a, A comprend donc l'*Hélicoptère de Surveillance,* le *Dossier Commercial HS,* la *Cabine HS,* le *Dossier Technique CHS,* le *Piston Moteur et le Dossier Technique PM.*

Soit I l'ensemble des noeuds dont tous les liens entre le noeud et la racine vérifient l'ensemble des critères « bloquants ». Dans l'exemple de la figure 5a, I comprend donc l'*Hélicoptère de Surveillance,* le *Dossier Commercial HS,* le *Piston Moteur et le Dossier Technique PM.*

Soit E l'ensemble des noeuds qui ne vérifient pas les critères « bloquants ». Dans l'exemple de la figure 5a, E se réduit à l'unique noeud *Cabine HS.*

Soit F l'ensemble E étendu avec les descendants de tous les éléments de E. F est l'ensemble complémentaire de I : / ∩ *F* = ∅ et / *U F* = *A.* Dans l'exemple de la figure 5a, F est constitué de deux éléments, la *Cabine HS* et le *Dossier Technique CHS*.

Soit H l'ensemble des noeuds qui vérifient les critères prédéterminés « non bloquants ». Dans l'exemple de la figure 5a, H contient le *Dossier Commercial HS,* le *Dossier Technique CHS et le Dossier Technique PM.*

Soit S le résultat de la recherche.

Alors *S = H* ∩ / (principe de la méthode directe). Or 1 et F sont complémentaires donc / *= A - F*. En remplaçant l dan la méthode directe, on obtient S = *H* ∩ *(A* - *F).*

Le but de l'invention est une méthode efficace de détermination de *(A - F).* La première requête détermine E, la deuxième *H* ∩ *(A - F).*

La représentation de l'arbre conditionnel sous sa forme indexée permet d'exclure en une seule requête les descendants d'un noeud ne vérifiant pas un critère bloquant.

Cette première requête porte sur tous les noeuds de A qui ne vérifient pas l'ensemble des critères bloquants : on obtient un ensemble de noeuds E d'index non valables.

F est l'ensemble des descendants de E ; par construction de l'arbre indexé, F correspond donc à tous les noeuds N dont la comparaison de l'index avec l'index d'un des noeuds N' de E montre une relation de descendance de N' vers N. Dans le cas d'une indexation par intervalle, les noeuds de F sont les noeuds dont l'intervalle est inclus dans l'un des intervalles des noeuds de E. Ainsi A - *F* est l'ensemble des noeuds dont l'intervalle n'est inclus dans aucun des intervalles de E. Dans le cas d'une indexation par chemin, les noeuds de F sont les noeuds dont le chemin commence par l'un des chemins de E. De la même façon, A - F est l'ensemble des noeuds dont le chemin ne commence par aucun des chemins de E.

A - F est donc déterminé sans même évaluer F.

Cet ensemble E est donc l'ensemble des index à exclure. Appliqué à l'exemple de la figure 5a, l'ensemble des noeuds de E qui ne satisfont pas le critère bloquant « le champ 'Confidentiel' est 'Faux' » comprend uniquement le noeud *Cabine HS* : son index, l'intervalle [5, 8] ou le chemin `1/2/4' est donc l'unique index à exclure.

La deuxième requête porte sur les noeuds de A-F qui vérifient l'ensemble des critères non bloquants pour obtenir *H* ∩ (*A* - *F*). Dans le cas de l'indexation par intervalle, cela revient à chercher les noeuds dont les intervalles ne sont inclus dans aucun des intervalles des noeuds de E et vérifiant l'ensemble des critères non bloquants sur tous les noeuds de A. En conséquence, le *Dossier Technique CHS* n'est pas retourné car son intervalle [6, 7] est inclus dans l'intervalle d'un des noeuds de E : [5, 8], l'intervalle de la *Cabine HS.* De la même façon pour l'indexation par chemin, *H* ∩ *(A -* F) est l'ensemble des noeuds dont le chemin ne commence par aucun des chemins de E. Le *Dossier Technique CHS* n'est pas retourné car son chemin '1/2/4/5' commence par l'un des chemins de E : '1/2/4', le chemin de la *Cabine HS.* Les résultats de la recherche des noeuds de *A -* F vérifiant le critère documentaire sont donc le noeud *Dossier Commercial HS* et le noeud *Dossier Technique PM.* Ce résultat est bien le même que celui obtenu précédemment.

On a représenté figure 7 une représentation linéaire des intervalles, la partie à exclure étant hachurée.

Les recherches ascendantes se font de la même manière en deux requêtes sur l'arbre ascendant indexé.

## Revendications

1. Procédé de recherche hiérarchique de données vérifiant au moins un ensemble de critères prédéterminés C, dans un graphe orienté acyclique comportant des noeuds et des liens entre ces noeuds et qui est stocké dans des tables d'un système de gestion de base de données relationnelle apte à être interrogé par un langage de requête, les critères étant déterminés sur les noeuds et/ou les liens, **caractérisé en ce que** chaque critère étant déterminé
- bloquant c'est-à-dire tel que dès que le critère n'est pas vérifié sur un lien ou un noeud, le noeud terminal de ce lien respectivement ce noeud et ses noeuds descendants sont exclus,
- ou non bloquant, c'est-à-dire tel que dès que le critère n'est pas vérifié sur un lien respectivement un noeud, seul ce lien respectivement ce noeud est exclu, sans conséquence sur ses noeuds descendants, il comprend les étapes suivantes consistant à :
- séparer l'ensemble C en un ensemble de critères bloquants C_{b} et un ensemble de critères non bloquants C_{nb}
- rechercher au moyen du langage de requête les noeuds du graphe vérifiant l'ensemble des critères bloquants C_{b}, ces noeuds étant regroupés dans un ensemble G,
- rechercher au moyen du langage de requête, les noeuds de G vérifiant l'ensemble des critères non bloquants C_{nb}.

2. Procédé de recherche hiérarchique de données selon la revendication précédente, **caractérisé en ce que** préalablement aux étapes de recherche, le graphe orienté acyclique est transformé en un arbre A complété par indexation, et stocké dans le système de gestion de base de données,
la 1ere étape de recherche comprend l'étape consistant à effectuer une requête au moyen du langage de requête, sur les noeuds de l'arbre A ne vérifiant pas l'ensemble de critères bloquants prédéterminés C_{b}, ces noeuds étant regroupés dans un ensemble E,
la 2è étape de recherche comprend l'étape consistant à effectuer une requête au moyen du langage de requête et en utilisant ladite indexation, sur les noeuds de A vérifiant l'ensemble de critères non bloquants prédéterminés C_{nb} et tels que chaque noeud n'est le descendant d'aucun noeud de E.

3. Procédé de recherche hiérarchique de données selon la revendication précédente, **caractérisé en ce que** l'arbre A est descendant ou ascendant.

4. Procédé de recherche hiérarchique de données selon l'une quelconque des revendications 2 à 3, **caractérisé en ce que** l'indexation est une indexation par intervalles ou par chemins.

5. Procédé de recherche hiérarchique de données selon l'une quelconque des revendications précédentes, **caractérisé en ce que** le langage de requêtes est le langage SQL.

6. Logiciel applicatif comportant des moyens de mise en oeuvre du procédé selon l'une des revendications 1 à 5.

7. Logiciel applicatif selon la revendication précédente, **caractérisé en ce que** le logiciel applicatif est un système de gestion de documents, ou un système de gestion de configurations, ou un système de gestion de cycle de vie d'un produit.

## Revendications modifiées

### Revendications modifiées conformément à la règle 137(2) CBE.

**1.** Procédé de recherche hiérarchique de données vérifiant au moins un ensemble de critères prédéterminés C, dans un graphe orienté acyclique comportant des noeuds et des liens entre ces noeuds et qui est stocké dans des tables d'un système de gestion de base de données relationnelle apte à être interrogé par un langage de requête, les critères étant déterminés sur les noeuds et/ou les liens, **caractérisé en ce qu'**il comprend une étape de transformation du graphe orienté acyclique en un arbre A complété par indexation, et de stockage dans le système de gestion de base de données, et **en ce que** chaque critère étant déterminé
- bloquant c'est-à-dire tel que dès que le critère n'est pas vérifié sur un lien ou un noeud, le noeud terminal de ce lien respectivement ce noeud et ses noeuds descendants sont exclus,
- ou non bloquant, c'est-à-dire tel que dès que le critère n'est pas vérifié sur un lien respectivement un noeud, seul ce lien respectivement ce noeud est exclu, sans conséquence sur ses noeuds descendants,
il comprend les étapes suivantes consistant à :
- séparer l'ensemble C en un ensemble de critères bloquants C_{b} et un ensemble de critères non bloquants C_{nb}
- rechercher au moyen du langage de requête les noeuds de l'arbre A ne vérifiant pas l'ensemble de critères bloquants prédéterminés C_{b}, ces noeuds étant regroupés dans un ensemble E,
- rechercher au moyen du langage de requête, et en utilisant ladite indexation, les noeuds de A vérifiant l'ensemble de critères non bloquants prédéterminés C_{nb} et tels que chaque noeud n'est le descendant d'aucun noeud de E,
- paginer le résultat de la recherche.

**2.** Procédé de recherche hiérarchique de données selon la revendication précédente, **caractérisé en ce que** l'arbre A est descendant ou ascendant.

**3.** Procédé de recherche hiérarchique de données selon l'une quelconque des revendications précédentes, **caractérisé en ce que** l'indexation est une indexation par intervalles ou par chemins.

**4.** Procédé de recherche hiérarchique de données selon l'une quelconque des revendications précédentes, **caractérisé en ce que** le langage de requêtes est le langage SQL.

**5.** Logiciel applicatif comportant des moyens de mise en oeuvre du procédé selon l'une des revendications précédentes.

**6.** Logiciel applicatif selon la revendication précédente, **caractérisé en ce que** le logiciel applicatif est un système de gestion de documents, ou un système de gestion de configurations, ou un système de gestion de cycle de vie d'un produit.
